# EUROPÄISCHE PATENTSCHRIFT

(11) **EP 0 729 566 B1**
(45) Veröffentlichungstag und Bekanntmachung des Hinweises auf die Patenterteilung: **17.03.1999**
(21) Anmeldenummer: 95900638.8
(22) Anmeldetag: 17.11.1994
(51) Int. Cl.: G01N 1/06

(54) **MIKROTOM**
MICROTOME
MICROTOME

(30) Priorität: 16.11.1993 DE 4339071
(43) Veröffentlichungstag der Anmeldung: 04.09.1996
(73) Patentinhaber: Ganter, Walter, 69190 Walldorf (DE); Schneider, Erwin, 69226 Nussloch (DE)
(72) Erfinder: Ganter, Walter, 69190 Walldorf (DE); Schneider, Erwin, 69226 Nussloch (DE)
(74) Vertreter: Naumann, Ulrich, Dr.-Ing.
(86) Internationale Anmeldenummer: DE9401358
(87) Internationale Veröffentlichungsnummer: WO9514219

(56) Entgegenhaltungen:
- EP-A- 0 358 013
- EP-A- 0 544 181
- WO-A-89/01579
- DE-A- 3 436 531
- DE-C- 45 504
- DE-C- 3 404 098
- DE-C- 3 539 138
- DE-C- 3 604 029
- DE-U- 9 114 791
- US-A- 3 926 085
- US-A- 4 479 402
- FEINWERKTECHNIK + MESSTECHNIK, Bd.100, Nr.4, April 1992, MUENCHEN DE Seiten 129 - 131, XP287938 H. GARBERS ET AL. 'Schnitte vom Feinsten'

## Beschreibung

Die Erfindung betrifft ein Mikrotom mit einer Grundplatte, einem von der Grundplatte getragenen Gestell, einer ein Handrad aufweisenden Antriebseinrichtung, einem von der Antriebseinrichtung beaufschlagten, vertikal geführten Mikrometerwerk für den linearen Vorschub einer Objekthalteeinrichtung und einer ein Messer aufweisenden Messerhalteeinrichtung, wobei das Handrad auf einer von außen in das Gestell hineinragenden, am Gestell drehbar gelagerten Welle befestigt und je Umdrehung des Handrads ein die Objekthalteeinrichtung tragender Zylinder des Mikrometerwerks um einen einstellbaren Betrag in Richtung der Messerhalteeinrichtung bewegbar ist, wobei am freien Ende der Welle - innerhalb des Gestells - ein die Drehachse der Welle umlaufendes Betätigungsorgan vorgesehen ist, wobei das Betätigungsorgan verschiebbar auf eine dem Mikrometerwerk zugeordnete Horizontalführung greift und wobei das Mikrometerwerk gemeinsam mit der Objekthalteeinrichtung entsprechend der Exzentrizität des Betätigungsorgans vertikal bewegbar ist.

Aus der DE-C 45 504 ist ein gattungsbildendes Rotationsmikrotom bekannt, welches zum Antrieb ein außen angeordnetes Handrad aufweist. Dieses Handrad ragt in das eigentliche Mikrotom hinein und ist am Gestell über eine Welle drehbar gelagert. Je Umdrehung des Handrades wird ein die Objekthalteeinrichtung tragender Zylinder des Mikrometerwerks um einen einstellbaren Betrag in Richtung der Messehalteeinrichtung bewegt.

Für das bekannte Mikrotom ist des weiteren wesentlich, daß am freien Ende der Welle - innerhalb des Mikrotoms - ein umlaufendes Betätigungsorgan vorgesehen ist. Dieses Betätigungsorgan greift in eine dem Mikrometerwerk zugeordnete Führungsnut, wobei das Mikrometerwerk gemeinsam mit der Objekthalteeinrichtung entsprechend der Exzentrizität des Betätigungsorgans vertikal bewegbar ist. Genauer gesagt greift bei dem aus der DE-C 45 504 bekannten Mikrotom ein Zapfen in ein auf dem Schlitten zwischen den Leisten bewegbar angeordnetes Gleitklötzchen. Mit dem Schlitten bewegt sich in gleicher Richtung ein weiterer Schlitten und die darauf verstellbare Objektscheibe. Jedenfalls wird das Gleitklötzchen in einer durch die beiden Leisten gebildeten Nut horizontal geführt, wobei der die Leisten tragende Schlitten entsprechend der Exzentrizität des Zapfens vertikal auf und ab bewegt wird.

Aus der US-A-3 926 085 ist ebenfalls ein Rotationsmikrotom bekannt, bei dem ebenfalls die Drehbewegung eines Handrads in eine lineare Bewegung eines Schlittens umgewandelt wird. Auch dort ist eine nutähnliche Führung eines exzentrisch angeordneten Eingriffsmittels vorgesehen, wobei die Exzentrizität des Eingriffsmittels zu einer Auf- und Abbewegung des Schlittens führt.

Der vorliegenden Erfindung liegt nun die Aufgabe zugrunde, ein Mikrotom der gattungsbildenden Art derart auszugestalten und weiterzubilden, daß bei einfachster Konstruktion die Funktionsweise, insbesondere die Wandlung der zunächst rotatorischen Bewegung der Handkurbel in eine lineare Bewegung des Schlittens bei robuster konstruktiver Auslegung gewährleistet ist.

Das erfindungsgemäße Mikrotom löst die voranstehende Aufgabe durch die Merkmale des Patentanspruches 1. Danach ist ein Mikrotom der eingangs genannten Art dadurch gekennzeichnet, daß die Horizontalführung als gehärtete Führungswelle ausgebildet ist und daß die Führung als Führungsbuchse ausgebildet ist und die Führungswelle zumindest weitgehend umgreift.

Erfindungsgemäß ist hier erkannt worden, daß eine Umwandlung der Drehbewegung des Handrades in eine lineare Auf- und Abbewegung des Schlittens bzw. der Objekthalteeinrichtung dadurch in ganz besonderem Maße bei robuster konstruktiver Ausgestaltung gewährleistet ist, daß die Horizontalführung als gehärtete Führungswelle ausgebildet ist, die wiederum von der Führung gleitend umgriffen wird. Die Führung ist dabei als auf der Führungswelle laufende Führungsbuchse ausgeführt. Dadurch ist die Führung bzw. Führungsbuchse auf der Führungswelle zwangsgeführt und kann sich auch bei erheblichem Verschleiß noch ungehindert auf der Führungswelle horizontal bewegen. Entsprechend der Exzentrizität des Betätigungsorgans wird das Mikrometerwerk aufgrund der dort angelenkten Horizontalführung vertikal bewegt. Auch insoweit ist eine Zwangsführung bei geringstmöglichem Verschleiß realisiert.

In vorteilhafter Weise umfaßt das Betätigungsorgan einen vorzugsweise an einem Schwenkarm exzentrisch zur Drehachse der Welle angeordneten, in eine Führung greifenden Stift. Die Führung läuft wiederum auf der Horizontalführung, wobei diese mit ihrer gesamten Lauffläche an der Horizontalführung aufliegt. Auf jeden Fall ist hier ein die Kraftaufnahme begünstigender Flächenkontakt geschaffen.

Des weiteren könnte die Führungswelle mit vorzugsweise zwei Lagerarmen am Mikrometerwerk gehalten sein. Dadurch ergibt sich eine ganz besonders robuste Anlenkung der Führungswelle an dem Mikrometerwerk, wodurch die Funktionssicherheit des Mikrotoms abermals begünstigt ist.

Eine Zylinderführung bewegt sich bei jeder Rotationsbewegung des Handrades am Gestell vertikal, d.h. auf und ab. Diese Zylinderführung ist in vorteilhafter Weise mit einem Kreuzrollenführungssystem am Gestell befestigt. Neben dem Zylinder mit einer Mikrometerspindel lagert die Zylinderführung einen Vorschubmechanismus, d.h. den Mechanismus zum horizontalen Vorschub der Objekthalteeinrichtung. Zur Gewährleistung einer hinreichenden Stabilität und eines gleichmäßigen Vertikalhubs ist die Kreuzrollenführung bewußt überdimensioniert und erhöht die Funktionssicherheit des hier beanspruchten Mikrotoms ein weiteres Mal.

Nachfolgend sei auf die Trimmeinrichtung Bezug genommen, die zum Heranbringen des Objektes an das Messer in kleinen vorgegebenen bzw. vorgebbaren Schritten dient. Diese Trimmeinrichtung könnte direkt am Gestell mit einem vorzugsweise vorne links vorgesehenen Trimmhebel angeordnet sein, durch den die Trimmfunktion aktivierbar ist. Hinsichtlich der Funktionsweise der Trimmeinrichtung ist es von besonderem Vorteil, wenn diese während des Rückzugs, vorzugsweise am unteren Zustellpunkt, aktivierbar ist. Des weiteren könnte die Trimmeinrichtung fest vorgegebene Trimmstufen aufweisen, nämlich bspw. Trimmstufen mit 10, 20 und 30 m. Somit würde der Trimmvorschub von 10, 20 oder 30 m um den Rückzugsbereich von 100 m verringert werden, da der Trimmvorgang während des Rückzugs stattfindet.

In konkreter konstruktiver Hinsicht könnte die Trimmeinrichtung eine den Trimmhebel mit einer eine Trimmkurve aufweisenden drehbaren Rastscheibe verbindende Trimmwelle umfassen. Die Rastscheibe bzw. Trimmkurve dient zur Anlage des Zustellhebels, wobei dieser als etwa mittig gelagerter Hebel mit beidseitigen Armen ausgebildet sein kann.

Wie bereits im voranstehenden Abschnitt erwähnt, könnte das Mikrometerwerk einen Rückzugsmechanismus zum Rückzug von vorzugsweise 100 m nach dem Schneiden aufweisen. Dieser Rückzug ist erforderlich, um eine Beschädigung des Messers und/oder des Objektes beim Hochfahren des Objektes nach dem Schneiden zu vermeiden. Im konkreten befindet sich das Objekt nach dem Schneidvorgang unterhalb des Messers und wird - entsprechend des vorgegebenen Rückzugs - vor oder bei dem Aufwärtsfahren zurückgezogen.

Im konkreten ist der Rückzug der Objekthalteeinrichtung durch ein sich vertikal bewegendes Schiebeelement in einer vorgegebenen Position auslösbar. Mittels einer Achse mit Lager ist eine Rückzugsgabel gegen die Mikrometerspindel schiebbar, wodurch die Mikrometerspindel gegen die Kraft des Federpakets - zwischen den Mutterteilen der Mikrometerspindel - entgegen der Zustellrichtung nach hinten gedrückt wird. Die Rückzugsgabel ist mit zwei abgeflachten, oben und unten am Mikrometerwerk gelagerten Bolzen formschlüssig verbunden. Durch geringe Verdrehung wird der Rückzug mit einfachen Mitteln erreicht.

Des weiteren ist ein Grobtrieb vorgesehen, der der schnellen Überbrückung des Horizontalhubs bzw. zur groben Annäherung an das Messer dient. Dieser Grobtrieb wirkt direkt auf die Mikrometerspindel. Vorzugsweise auf der linken Seite der Grundplatte, insbesondere in der vordersten Position, ist hierzu ein Lagerblock mit einem Grobtriebrad vorgesehen. Die Drehbewegung des Grobtriebrades kann über einen sich in zwei Kreuzgelenken bewegenden Vierkantenstab zum Längenausgleich vorzugsweise auf ein Riemenrad übertragen werden. Die Drehbewegung des Riemenrades wird dann - ebenfalls in vorteilhafter Weise - über einen Zahnriemen auf ein zweites, am Mikrometerwerk befestigtes Zahnriemenrad auf die Mikrometerspindel übertragen.

Ebenso könnte die Drehbewegung des Grobtriebrades über einen Zahnriemen auf eine biegsame Welle übertragen werden. Die biegsame Welle weist endseitig ein in eine Vierkantführung greifendes Vierkantprofil zum Längenausgleich auf, so daß eine Dehnung und Stauchung der Welle wirksam vermieden ist. Die Drehbewegung der biegsamen Welle ist über eine endseitig am Mikrometerwerk vorgesehene Kegelradpaarung auf die Mikrometerspindel übertragbar. Zur Vermeidung einer Beschädigung des Endanschlags auf der Achse am Grobtriebrad ist des weiteren eine Rutschkupplung vorgesehen. Diese Rutschkupplung kann mit federgelagerten Kugeln arbeiten und gleichzeitig eine Anti-Blockier-Einrichtung darstellen, falls nämlich ein Überbrücken der Rutschkupplung notwendig ist. Bei Überschreiten eines bestimmten Drehmoments bleibt somit das Drehen am Grob-triebrad ohne Wirkung, so daß eine Beschädigung bei Erreichen des Endanschlags ausgeschlossen ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Darstellung ein Ausführungsbeispiel eines erfindungsgemäßen Mikrotoms von der Rückseite, wobei sich das Mikrometerwerk in einer unteren Position des Vertikalhubs befindet,
- Fig. 2: den Gegenstand aus Fig. 1 unter einem anderen Winkel, wobei sich das Mikrometerwerk in einer oberen Position des Vertikalhubs befindet,
- Fig. 3: in einer schematischen Darstellung den Zylinder mit Mikrometermutter und Spindel des Mikrometerwerks,
- Fig. 4: in einer schematischen Darstellung, vergrößert, einen Teil des Vorschubmechanismus nebst Zustellhebel und Freilauf,
- Fig. 5: in einer vergrößerten Draufsicht die von der Vorderseite des Mikrotoms über ein Stellrad vorzunehmende Schnmittdickeneinstellung,
- Fig. 6: in einer schematischen Seitenansicht einen zur Vermeidung einer Beschädigung an Objekt und Messer dienenden Rückzugmechanismus,
- Fig. 7: ein Detail des in Fig. 6 gezeigten Rückzugmechanismus in vergrößerter Darstellung,
- Fig. 8: in einer schematischen Darstellung die einen Grobtrieb betreffenden Bauteile und
- Fig. 9: in einer schematischen Darstellung die einen Kollisionsschutz betreffenden Bauteile.

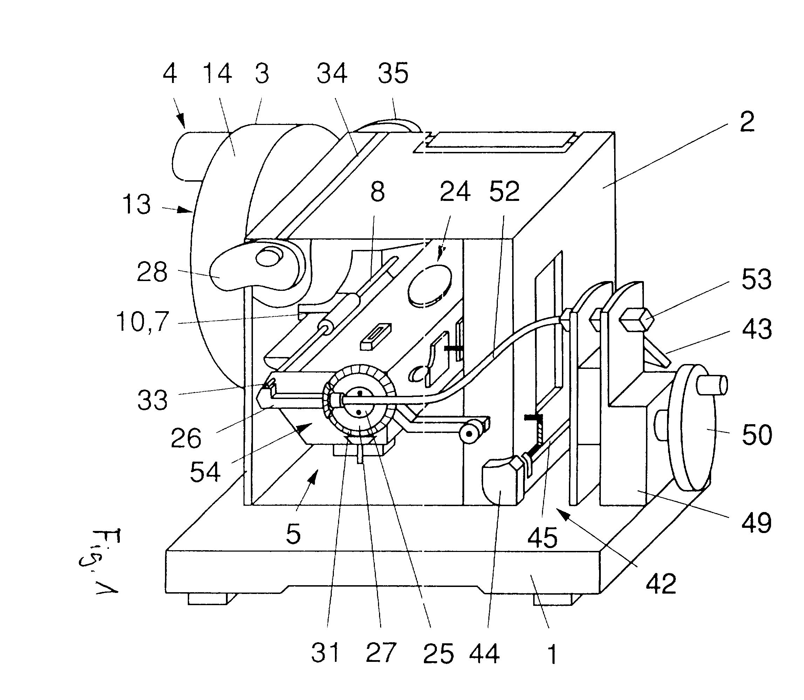

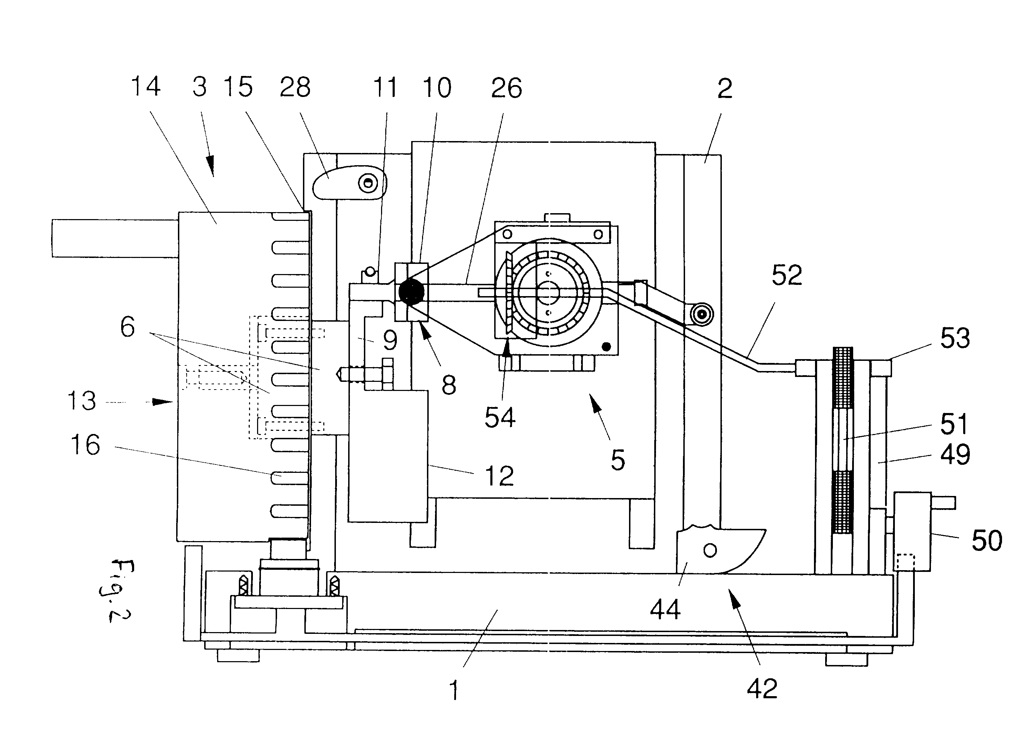

Die Fig. 1 und 2 zeigen ein Mikrotom mit einer Grundplatte 1, einem von der Grundplatte 1 getragenen Gestell 2, einer ein Handrad 3 aufweisenden Antriebseinrichtung 4, einem von der Antriebseinrichtung 4 beaufschlagten Mikrometerwerk 5 für den linearen Vorschub einer in den Fig. nicht gezeigten Objekthalteeinrichtung und einer ein ebenfalls in den Fig. nicht gezeigten, ein Messer aufweisenden Messerhalteeinrichtung auf der Vorderseite des Mikrotoms. Das Handrad 3 ist auf einer von außen in das Gestell 2 hineinragenden, am Gestell 2 drehbar gelagerten Welle 6 befestigt.

Am freien Ende der Welle 6 - innerhalb des Gestells 2 - ist ein die Drehachse der Welle 6 umlaufendes Betätigungsorgan 7 vorgesehen. Das Betätigungsorgan 7 greift verschiebbar auf eine dem Mikrometerwerk 5 zugeordnete Horizontalführung 8. Entsprechend der Exzentrizität des Betätigungsorgans 7 ist das Mikrometerwerk 5 gemeinsam mit der nicht gezeigten Objekthalteeinrichtung vertikal bewegbar, so daß ein Schnitt an dem Objekt erfolgen kann.

In den Fig. 1 und 2 ist des weiteren angedeutet, daß das Betätigungsorgan 7 einen an einem Schwenkarm exzentrisch zur Drehachse der Welle 6 angeordneten, in eine Führung 10 greifenden Stift 11 umfaßt und daß die Führung 10 auf der Horizontalführung 8 läuft. Diese Horizontalführung ist als gehärtete Führungswelle ausgebildet, wobei die Führung 10 die Führungswelle insgesamt umgreift. Des weiteren ist die Führungswelle bzw. Horizontalführung 8 mit zwei nicht gezeigten Lagerarmen am Mikrometerwerk 5 gehalten.

Die Fig. 1 und 2 lassen des weiteren erkennen, daß zwischen dem Lager der das Handrad 3 tragenden Rolle 6 und dem Betätigungsorgan 7 eine dem Handrad 3 zugeordnete Ausgleichsmasse 12 vorgesehen ist. Hinsichtlich deren Funktion wird auf den allgemeinen Teil der Beschreibung verwiesen. Fig. 2 läßt jedenfalls weiter erkennen, daß die Ausgleichsmasse 12 der dem Stift 11 gegenüberliegenden Seite des Schwenkarms 9 zugeordnet ist.

Das Handrad 3 besteht aus einer Radscheibe 13 und einem von der Radscheibe 13 orthogonal abragenden Rand 14, der in eine im Gestell 2 ausgebildete Ringnut 15 eingreift. Das Handrad 3 weist auf der dem Gestell 2 zugewandten Seite orthogonal zu dem Gestell 2 verlaufende Nuten 16 zum formschlüssigen Eingreifen eines Arretiermechanismus 17 auf.

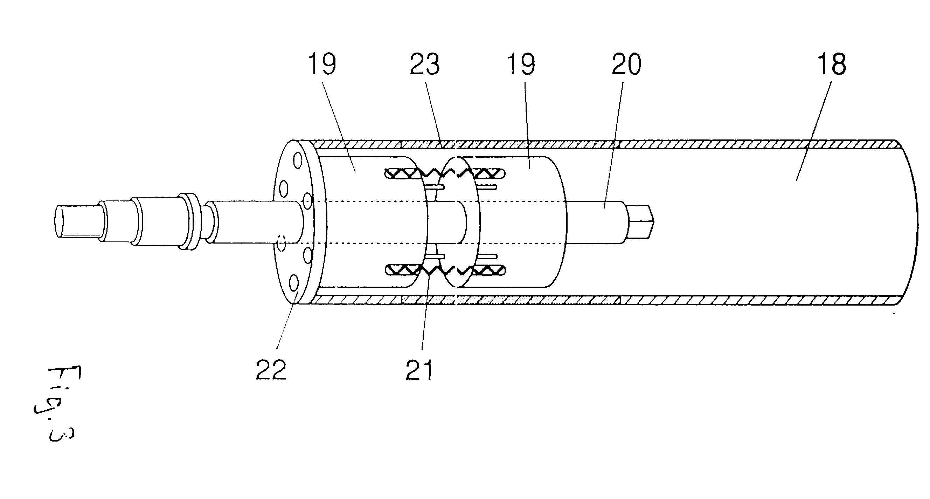

Gemäß der Darstellung in Fig. 3 weist das Mikrometerwerk eine innerhalb des Zylinders 18 in einer Mikrometermutter 19 geführte, von einem Vorschubmechanismus drehbeaufschlagte Mikrometerspindel 20 auf. Die Mikrometerspindel 20 verfügt wiederum über ein Außengewinde mit einer Steigung von 1 mm. Die Mikrometermutter 19 ist gemäß dem in Fig. 3 dargestellten Ausführungsbeispiel zweiteilig ausgeführt. Zwischen den beiden Mutterteilen wirkt ein die Mutterteile auseinanderdrückendes Federpaket 21, so daß die Gewindeflanken der Mikrometermutter 19 stets an den Gewindeflanken der Mikrometerspindel 20 anliegen und ein Spiel vermeiden. Der der Objekthalteeinrichtung abgewandte Teil der Mikrometermutter 19 ist mit dem Zylinder 18 verschraubt, so daß sich der der Objekteinrichtung zugewandte Teil der Mikrometermutter 19 unter Kraftbeaufschlagung durch das Federpaket 21 stets ausrichten kann. Fig. 3 zeigt des weiteren, daß der Zylinder 18 auf der der Objekthalteeinrichtung zugewandten Seite durch eine die Mikrometerspindel 20 zentrierende Lagerscheibe 22 geschlossen ist. Schließlich läßt Fig. 3 erkennen, daß der Zylinder 18 eine Verdrehsicherung aufweist und daß die Verdrehsicherung eine in eine Nut 23 an der Zylinderführung im Bereich des Horizontalhubs greifenden, in Fig. 3 nicht gezeigten Führungsbolzen umfaßt.

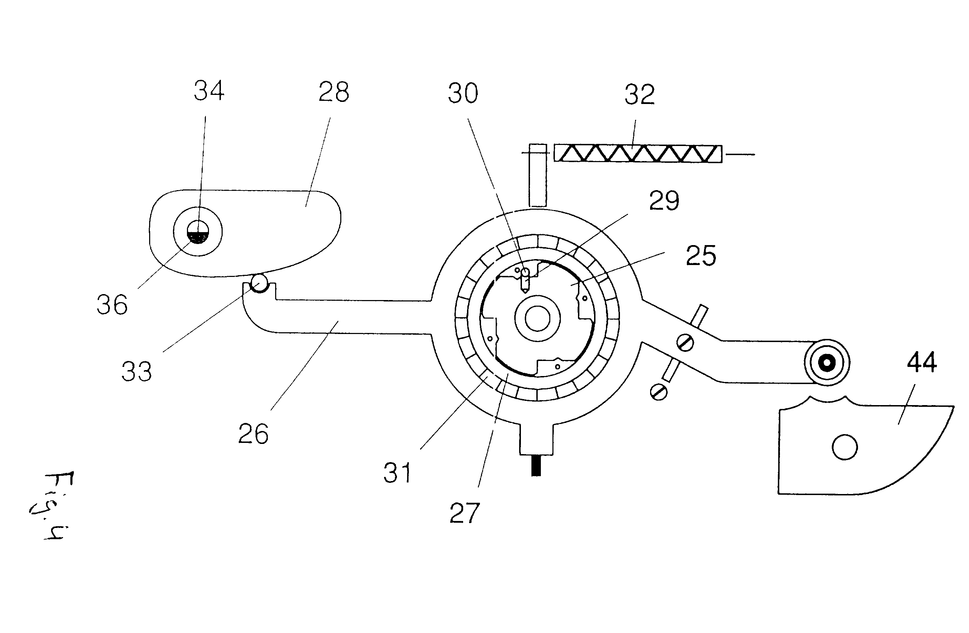

Fig. 4 zeigt in einer vergrößerten Detaildarstellung, daß der Vorschubmechanismus 24 eine an dem der Objekthalteeinrichtung abgewandten Ende des Zylinders 18 vorgesehene Friktionsscheibe 25 aufweist, die über einen mit einem Zustellhebel 26 verbundenen Friktionsring 27 zusammenwirkt. Der Zustellhebel 26 ist bei vertikaler Bewegung des Mikrometerwerks 5 über eine einstellbare Zustellkurve 28 beaufschlagbar, so daß der Zustellhebel 26 über den Freilauf auf die Mikrometerspindel 20 greift. Wie bereits zuvor erwähnt, dient die Anordnung von Friktionsscheibe 25 und Friktionsring 27 sowohl als Freilauf als auch zum eigentlichen Vorschub in eine definierte Richtung. Des weiteren ist in Fig. 4 angedeutet, daß es sich bei der Friktion um eine Vier-Punkte-Friktion handelt, wobei mittels Druckfedern 29 beaufschlagte Kugeln 30 in den Fig. nicht gezeigte Druckrollen beaufschlagen. Des weiteren dient die Friktionsscheibe 25 als Lagerung für eine Grobtriebzahnrad 31.

Wie bereits zuvor erwähnt, dient der in Fig. 3 besonders deutlich erkennbare Zustellhebel 26 einerseits der Feinzustellung und andererseits dem Trimmvorgang. Dieser Zustellhebel ist mittels einer horizontal verlaufenden Zugfeder 32 rückstellbar. Das zur Kontaktierung der Zustellkurve 28 dienende Ende des Zustellhebels 26 weist einen Kunststoffeinsatz 33 zum Linienkontakt mit der Zustellkurve 28 auf. Die Zustellkurve 28 hat in jeder Position exakt vorgegebene Zustellwerte, die über den Zustellhebel 26 auf das Mikrometerwerk 5 übertragen werden.

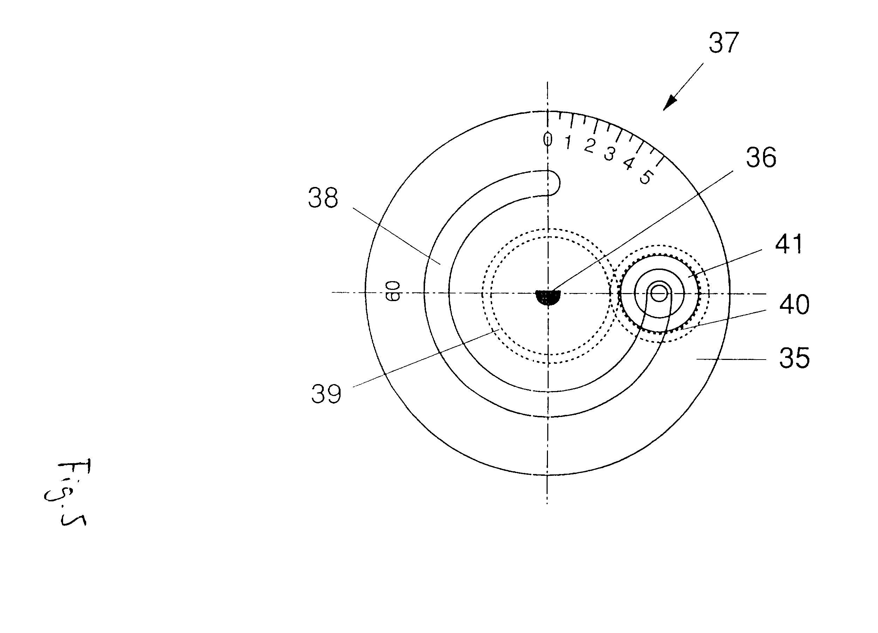

Die Position der Zustellkurve 28 und somit die Zustellwerte sind über eine mit der Zustellkurve 28 verbundene Welle 34 von der Vorderseite des Mikrotoms her über ein in Fig. 5 gezeigtes Stellrad 35 einstellbar.

Die Fig. 4 und 5 zeigen gemeinsam, daß der Zustellhebel 26 mit dem Stellrad 35 über endseitige Abflachungen 36 und entsprechende Bohrungen zwangsgekoppelt ist.

Fig. 5 zeigt des weiteren, daß die Welle 34 an bzw. in einer Skalenscheibe 37 drehbar ist. Die Welle 34 erstreckt sich durch die Skalenscheibe 37 hindurch, wobei die Drehung der Welle 34 durch beidseitige Anschläge aufgrund eines in der Skalenscheibe 37 ausgebildeten Langlochs 38 begrenzt ist. Die Position der Schnittdickenzustellung wird gemäß dem in Fig. 5 dargestellten Ausführungsbeispiel einer Schnittdickeneinstellung über ein Zahnrad 39 auf der Welle 34 mit einem zweiten Zahnrad 40 fixiert und über ein nicht gezeigtes Sichtfenster über der Skalenscheibe wiedergegeben. Aufgrund der hier gewählten Anordnung der Zahnräder 39, 40 wird eine definierte Untersetzung erreicht, die ein einfaches Einstellen der Schnittdicke mittels Drehknopf 41 ermöglicht.

Die Fig. 1, 2 und 4 zeigen zumindest Teile einer Trimmvorrichtung zur Annäherung der Objekthalteeinrichtung an das Messer in kleinen vorgebbaren Schritten. Diese Trimmeinrichtung 42 weist einen direkt am Gestell 2 vorne links vorgesehenen, in Fig. 1 lediglich angedeuteten Trimmhebel 43 auf. Die Trimmeinrichtung 42 ist während des Rückzugs am oberen Zustellpunkt der Mikrometereinrichtung aktivierbar und weist drei fest vorgegebene Trimmstufen mit 10, 20 und 30 m auf. Die Trimmeinrichtung umfaßt des weiteren eine den Trimmhebel mit einer eine Trimmkurve aufweisenden drehbaren Rastscheibe 44 verbindende Trimmwelle 45, die insbesondere in Fig. 1 erkennbar ist. Die Rastscheibe 44 bzw. Trimmkurve dient zur Anlage des Zustellhebels 26, wobei es sich hier um den dem zur Anlage an die Zustellkurve 28 gegenüberliegenden Teil des Zustellhebels 26 handelt.

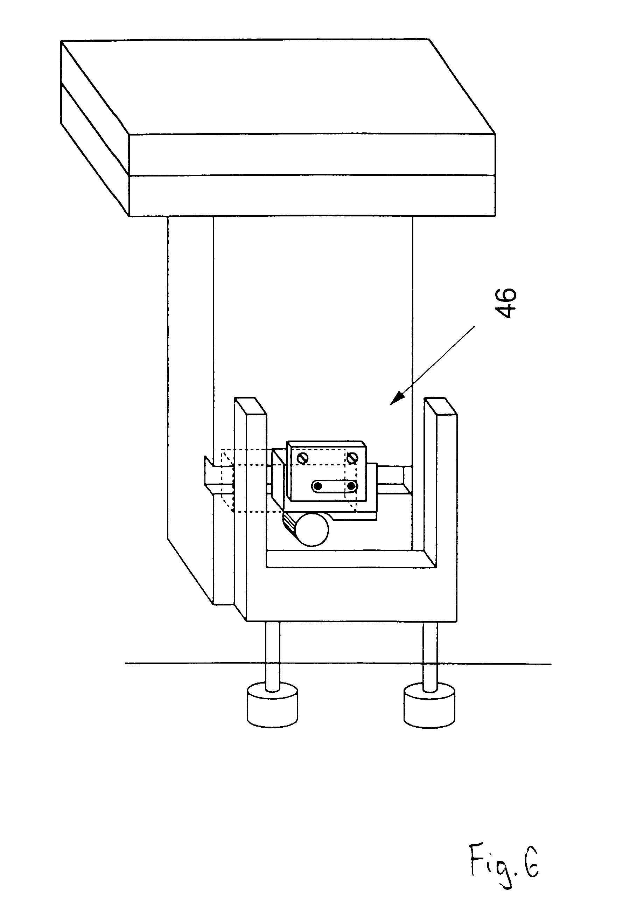

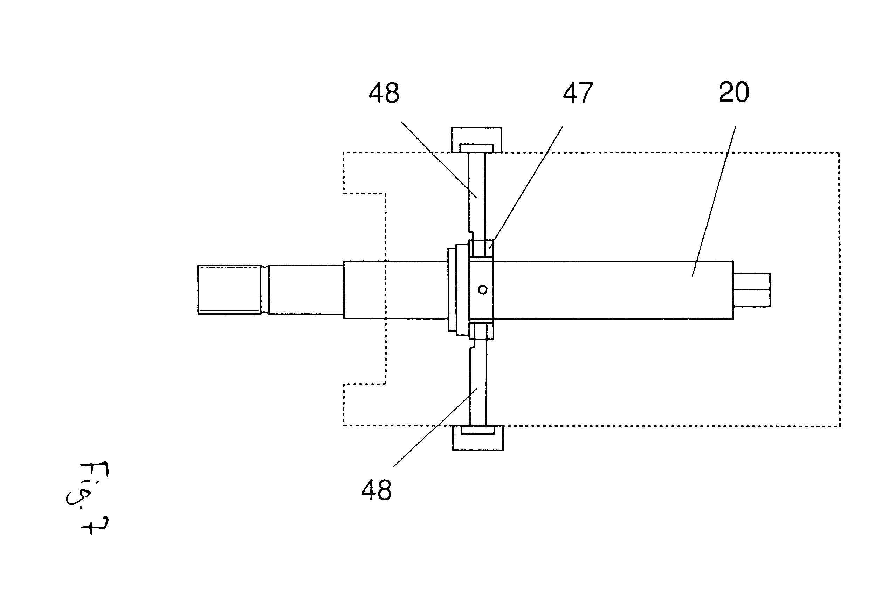

Gemäß den Darstellungen in den Fig. 6 und 7 weist das Mikrometerwerk einen Rückzugmechanismus zum Rückzug von etwa 100 m nach dem Schneiden auf. Der Rückzug ist durch ein sich vertikal bewegendes Schiebeelement 46 in einer vorgegebenen Position auslösbar. Mittels einer Achse mit Lager ist eine Rückzuggabel 47 gegen die Mikrometerspindel 20 schiebbar, wodurch die Mikrometerspindel 20 gegen die Kraft des in Fig. 3 gezeigten Federpakets 21 - entgegen der Zustellrichtung, d.h. nach hinten - gedrückt wird. Die Rückzuggabel 47 ist mit zwei abgeflachten, oben und unten am Mikrometerwerk 5 gelagerten Bolzen 48 formschlüssig verbunden, so daß durch geringe Verdrehung bereits der Rückzug erreicht wird.

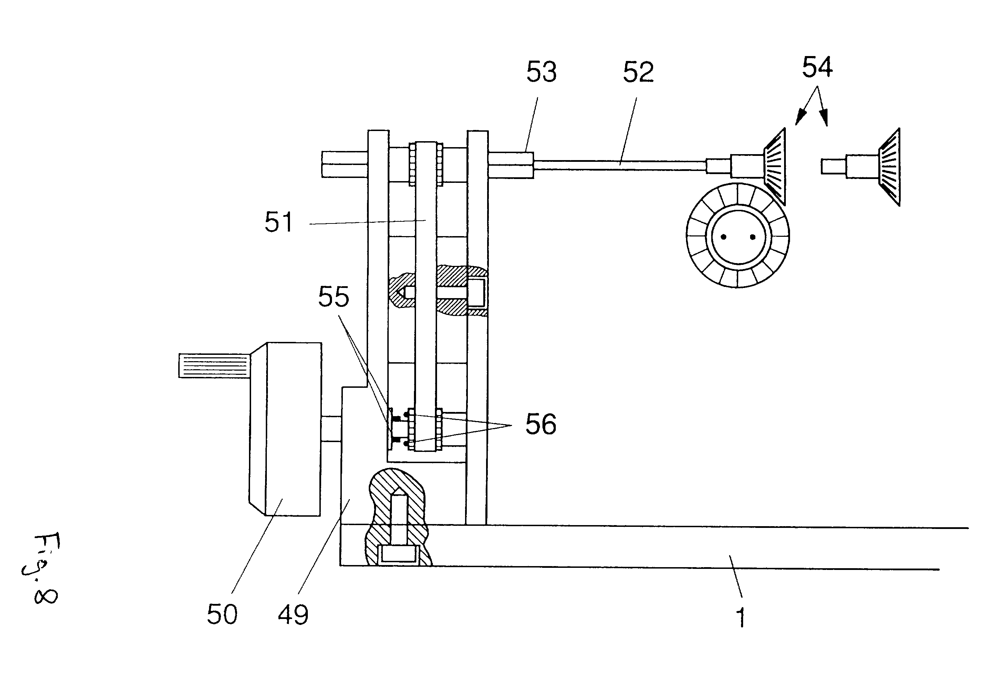

Zur schnellen Überbrückung des Horizontalhubs und zur groben Annäherung an das Messer ist ein in Fig. 8 angedeuteter Grobtrieb vorgesehen. Auf der linken Seite der Grundplatte 1 ist dazu ein auch in den Fig. 1 und 2 erkennbarer Lagerblock 49 vorgesehen, der insbesondere in Fig. 8 detailliert dargestellt ist. Der Lagerblock 49 weist ein Grobtriebrad 50 auf, dessen Drehbewegung über einen Zahnriemen 51 auf eine biegsame Welle 52 übertragen wird. Die biegsame Welle 52 weist endseitig ein in eine Vierkantführung greifendes Vierkantprofil 53 zum Längenausgleich auf, d.h. das Vierkantprofil 53 kann sich über seine Länge hinweg axial durch das Lager hindurch bewegen.

Die Drehbewegung der biegsamen Welle 52 wird über eine endseitig am Mikrometerwerk 5 vorgesehene Kegelradpaarung 54 auf die Mikrometerspindel 20 übertragen. Zur Vermeidung einer Beschädigung bei Erreichen des Endanschlags ist auf der Achse am Grobtriebrad 50 eine Rutschkupplung 55 vorgesehen. Die Rutschkupplung 55 arbeitet mit federgelagerten Kugeln 56.

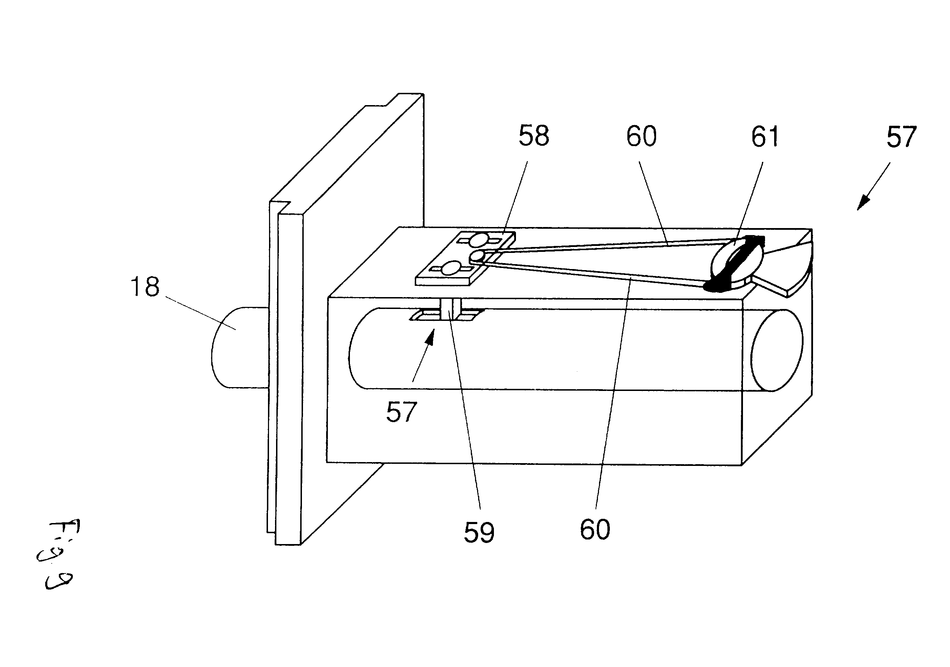

Zur Vermeidung einer Zerstörung des Mikrometerwerks bei Erreichen des Endanschlags nach maximalem Horizontalhub ist schließlich ein in Fig. 9 dargestellter Kollisionsschutz vorgesehen, der die weitere Zustellung außer Betrieb setzt. Der Kollisionsschutz weist ein auf das Mikrometerwerk 5 wirkendes Hebelsystem 57 auf, welches den Zustellhebel 26 aus der Zustellzone schwenkt. Dazu ist auf der Unterseite der Zylinderführung ein Schiebeelement 58 befestigt. Ein Mitnehmer 59 an dem Schiebeelement 58 ragt in eine Nut am Zylinder 18, so daß die Horizontalbewegung über einen gefederten Zahnriemen 60 auf ein Zahnriemenrad 61 übertragen wird. Ein am Zahnriemenrad 61 ausgebildeter Auslöser schiebt dann einen am Zustellhebel 26 vorgesehenen Bolzen zur Seite, wodurch der Zustellhebel 26 aus dem Bereich der Zustellkurve gedrückt wird. Nach Aktivierung des in Fig. 9 dargestellten Kollisionsschutzes ist demnach auch bei drehendem Handrad 3 kein Horizontalvorschub mehr möglich. Der Kollisionsschutz wird erst durch Zurückfahren des Zylinders 18 mittels Grobtrieb deaktiviert, wodurch der Zustellhebel 26 wieder in seine Arbeitsstellung gelangt.

## Patentansprüche

1. Mikrotom mit einer Grundplatte (1), einem von der Grundplatte (1) getragenen Gestell (2), einer ein Handrad (3) aufweisenden Antriebseinrichtung (4), einem von der Antriebseinrichtung (4) beaufschlagten, vertikal geführten Mikrometerwerk (5) für den linearen Vorschub einer Objekthalteeinrichtung und einer ein Messer aufweisenden Messerhalteeinrichtung, wobei das Handrad (3) auf einer von außen in das Gestell (2) hineinragenden, am Gestell (2) drehbar gelagerten Welle (6) befestigt und je Umdrehung des Handrads (3) ein die Objekthalteeinrichtung tragender Zylinder (18) des Mikrometerwerks (5) um einen einstellbaren Betrag in Richtung der Messerhalteeinrichtung bewegbar ist,
wobei am freien Ende der Welle (6) - innerhalb des Gestells (2) - ein die Drehachse der Welle (6) umlaufendes Betätigungsorgan (7) vorgesehen ist, wobei das Betätigungsorgan (7) verschiebbar auf eine dem Mikrometerwerk (5) zugeordnete Horizontalführung (8) greift und wobei das Mikrometerwerk (5) gemeinsam mit der Objekthalteeinrichtung entsprechend der Exzentrizität des Betätigungsorgans (7) vertikal bewegbar ist,
**dadurch gekennzeichnet,** daß die Horizontalführung (8) als gehärtete Führungswelle ausgebildet ist und daß die Führung (10) als Führungsbuchse ausgebildet ist und die Führungswelle zumindest weitgehend umgreift.

2. Mikrotom nach Anspruch 1, dadurch gekennzeichnet, daß das Betätigungsorgan (7) einen vorzugsweise an einem Schwenkarm (9) exzentrisch zur Drehachse der Welle (6) angeordneten, in eine ggf. einstellbare Führung (10) greifenden Stift (11) umfaßt und daß die Führung (10) auf der Horizontalführung (8) läuft.

3. Mikrotom nach Anspruch 1 oder 2, dadurch gekennzeichnet, daß die Führungswelle mit vorzugsweise zwei Lagerarmen am Mikrometerwerk (5) gehalten ist.

4. Mikrotom nach einem der Ansprüche 1 bis 3, dadurch gekennzeichnet, daß die Zylinderführung mit einem Kreuzrollenführungssystem am Gestell (2) befestigt ist und neben dem Zylinder (18) mit einer Mikrometerspindel (29) einen Vorschubmechanismus (24) lagert.

5. Mikrotom nach Anspruch 4, dadurch gekennzeichnet, daß die Kreuzrollenführung zur Gewährleistung einer hinreichenden Stabilität und eines gleichmäßigen Vertikalhubs bewußt überdimensioniert ist.

6. Mikrotom nach einem der Ansprüche 1 bis 5, dadurch gekennzeichnet, daß eine Trimmeinrichtung (42) zur Annäherung der Objekthalteeinrichtung an das Messer in kleinen vorgebbaren Schritten vorgesehen ist, wobei die Trimmeinrichtung (42) direkt am Gestell (2) mit einem vorzugsweise vorne links vorgesehenen Trimmhebel (43) angeordnet und während des Rückzugs, vorzugsweise am unteren Zustellpunkt, aktivierbar ist.

7. Mikrotom nach Anspruch 6, dadurch gekennzeichnet, daß die Trimmeinrichtung (42) fest vorgebbare Trimmstufen, vorzugsweise mit 10, 20 und 30 Mikrometern, aufweist und eine den Trimmhebel (43) mit einer eine Trimmkurve aufweisenden drehbaren Rastscheibe (44) verbindende Trimmwelle (45) umfaßt und daß die Rastscheibe (44) bzw. Trimmkurve zur Anlage des Zustellhebels (26) dient.

8. Mikrotom nach Anspruch 4 und ggf. einem der Ansprüche 5 bis 7, dadurch gekennzeichnet, daß das Mikrometerwerk (5) einen Rückzugmechanismus zum Rückzug von vorzugsweise 100 Mikrometern nach dem Schneiden aufweist, daß der Rückzug durch ein sich vertikal bewegendes Schiebeelement (46) in einer vorgebbaren Position auslösbar ist und daß mittels einer Achse mit Lager eine Rückzuggabel (47) gegen die Mikrometerspindel (20) schiebbar ist, wodurch die Mikrometerspindel (20) gegen die Kraft eines Federpakets (21) entgegen der Zustellrichtung - nach hinten - gedrückt wird, wobei die Rückzuggabel (47) mit zwei abgeflachten, oben und unten am Mikrometerwerk (5) gelagerten Bolzen (48) formschlüssig verbunden ist und daß durch geringe Verdrehung der Rückzug erreicht wird.

9. Mikrotom nach Anspruch 4 und ggf. einem der Ansprüche 5 bis 8, dadurch gekennzeichnet, daß zur schnellen Überbrückung des Horizontalhubs und zur groben Annäherung an das Messer ein direkt auf die Mikrometerspindel (20) wirkender Grobtrieb vorgesehen ist, daß vorzugsweise auf der der Handrad (3) abgewandten Seite der Grundplatte (2), insbesondere in der vordersten Position, ein Lagerblock (49) mit einem Grobtriebrad (50) vorgesehen ist und daß die Drehbewegung des Grobtriebrades (50) über einen sich in zwei Kreuzgelenken bewegenden Vierkantstab zum Längenausgleich vorzugsweise auf ein Riemenrad übertragen wird, wobei die Drehbewegung des Riemenrades über einen Zahnriemen (51) auf ein zweites, am Mikrometerwerk (5) befestigtes Zahnriemenrad auf die Mikrometerspindel (20) oder daß die Drehbewegung des Grobtriebrades (50) über einen Zahnriemen (51) auf eine biegsame Welle (52) übertragen wird und wobei die biegsame Welle (52) endseitig ein in eine Vierkantführung greifendes Vierkantprofil (53) zum Längenausgleich aufweist.

10. Mikrotom nach Anspruch 9, dadurch gekennzeichnet, daß die Drehbewegung der biegsamen Welle (52) über eine endseitig am Mikrometerwerk (5) vorgesehene Kegelradpaarung (54) auf die Mikrometerspindel (20) übertragbar ist, wobei zur Vermeidung einer Beschädigung bei Erreichen des Endanschlages auf der Achse am Grobtriebrad (50) eine Rutschkupplung (55) vorgesehen ist und wobei die Rutschkupplung (55) mit federgelagerten Kugeln (56) arbeitet und gleichzeitig eine Anti-Blockier-Einrichtung dargestellt, falls ein Überbrücken der Rutschkupplung durch nach innen Drücken des Grobtriebrads (50) und in die gewünschte Drehrichtung Drehen notwendig ist.

## Claims

1. Microtome having a base plate (1), a frame (2) carried by the base plate (1), a drive device (4) having a hand wheel (3), a vertically guided micrometer mechanism (5), acted upon by the drive device (4), for linearly advancing an object-holding device and a blade-holding device having a blade, the hand wheel (3) being attached to a shaft (6) which projects into the frame (2) from outside and which is rotatably mounted on the frame (2), and a cylinder (18) of the micrometer mechanism (5), which cylinder (18) carries the object-holding device, is moveable in the direction of the blade-holding device by an adjustable amount per rotation of the hand wheel (3),
an actuating mechanism (7) surrounding the rotation axis of the shaft (6) being provided at the free end of the shaft (6) - within the frame (2) -, the actuating mechanism (7) displaceably gripping a horizontal guide (8) associated with the micrometer mechanism (5), and the micrometer mechanism (5) being vertically moveable together with the object-holding device according to the eccentric mounting of the actuating mechanism (7),
characterised in that the horizontal guide (8) is in the form of a tempered guide shaft and in that the guide (10) is in the form of a guide bush and at least substantially surrounds the guide shaft.

2. Microtome according to claim 1, characterised in that the actuating mechanism (7) comprises a pin (11) that is arranged eccentrically relative to the rotation axis of the shaft (6), preferably on a pivot arm (9), and that protrudes into an optionally adjustable guide (10), and in that the guide (10) runs on the horizontal guide (8).

3. Microtome according to claim 1 or 2, characterised in that the guide shaft is held on the micrometer mechanism (5) preferably by two bearing brackets.

4. Microtome according to any one of claims 1 to 3, characterised in that the cylinder guide is attached to the frame (2) with a junction roller guide system and carries an advance mechanism (24) beside the cylinder (18) with a micrometer spindle (29).

5. Microtome according to claim 4, characterised in that the junction roller guide is intentionally over-dimensioned in order to ensure adequate stability and a uniform vertical stroke.

6. Microtome according to any one of claims 1 to 5, characterised in that a trimming device (42) is provided for bringing the object-holding device closer to the blade in small, predeterminable increments, the trimming device (42) being arranged directly on the frame (2) with a trimming lever (43) provided preferably at the front left-hand side, and being activatable during return movement, preferably at the lower feed point.

7. Microtome according to claim 6, characterised in that the trimming device (42) has fixedly predeterminable trimming steps, preferably of 10, 20 and 30 micrometres, and comprises a trimming shaft (45) connecting the trimming lever (43) to a rotatable locking disc (44) having a trimming cam, and in that the locking disc (44) or the trimming cam serves to operate the feed lever (26).

8. Microtome according to claim 4, and, optionally, any one of claims 5 to 7, characterised in that the micrometer mechanism (5) has a return mechanism for returning by preferably 100 micrometres after cutting, in that the return movement is actuatable by a vertically moving slide element (46) at a predeterminable position and in that a return fork (47) is slidable towards the micrometer spindle (20) by means of a shaft having a bearing, whereby the micrometer spindle (20) is urged against the force of a spring assembly (21) counter to the direction of feed - towards the rear -, the return fork (47) being connected in a positive-locking manner to two flattened bolts (48), arranged at the top and bottom of the micrometer mechanism (5), and in that return is achieved by slight rotation.

9. Microtome according to claim 4 and, optionally, any one of claims 5 to 8, characterised in that a coarse drive acting directly upon the micrometer spindle (20) is provided in order quickly to bridge the horizontal stroke and approximately to approach the blade, in that a bearing block (49) having a coarse drive wheel (50) is provided, preferably on the side of the base plate (2) which is remote from the hand wheel (3), in particular at the frontmost position, and in that the rotation movement of the coarse drive wheel (50) is transmitted preferably to a belt pulley via a square bar moving by means of two universal joints for longitudinal alignment, the rotation movement of the belt pulley being transmitted via a toothed belt (51) to a second toothed belt pulley, attached to the micrometer mechanism (5), and thus to the micrometer spindle (20), or in that the rotation movement of the coarse drive wheel (50) is transmitted to a flexible shaft (52) via a toothed belt (51), the flexible shaft (52) having, at one end, a square profile (53) extending into a square guide for longitudinal alignment.

10. Microtome according to claim 9, characterised in that the rotation movement of the flexible shaft (52) is transmittable to the micrometer spindle (20) via a bevel gear pair (54) provided at one end of the micrometer mechanism (5), a slip clutch (55) being provided on the shaft on the coarse drive wheel (50) in order to avoid damage when the limit stop is reached, and the slip clutch (55) working with spring-mounted balls (56) and also acting as an anti-lock device should it be necessary to bridge the slip clutch by pressing the coarse drive wheel (50) inwards and turning it in the desired direction of rotation.

## Revendications

1. Microtome avec une platine de base (1), avec un bâti (2) porté par la platine de base, avec un dispositif d'entraînement (4) présentant une roue à main (3), avec un mécanisme micrométrique (5) à guidage vertical commandé par le dispositif d'entraînement (4), pour l'avance linéaire d'un dispositif porte-objet et avec un dispositif porte-lame présentant une lame de coupe, où la roue à main (3) est fixée sur un arbre (6) monté à rotation dans le bâti (2) et pénétrant depuis l'extérieur dans ce bâti, et où pour chaque tour de rotation de la roue à main (3), un cylindre (18) du mécanisme micrométrique (5) portant le dispositif porte-objet est mû d'une valeur réglable en direction du dispositif porte-lame,
où à l'extrémité libre de l'arbre (6) - au sein du bâti - est prévu un organe de commande (7) tournant autour de l'axe de rotation de l'arbre (6), ledit organe de commande (7) s'engageant à glissement sur un guidage horizontal (8) associé au mécanisme micrométrique (5) et où le mécanisme micrométrique (5) est mû verticalement conjointement avec le dispositif porte-objet conformément à l'excentricité de l'organe de commande,
caractérisé en ce que le guidage horizontal a la forme d'un arbre de guidage trempé et en ce que le guidage (10) a la forme d'une douille de guidage et entoure au moins dans une large mesure l'arbre de guidage.

2. Microtome suivant la revendication 1, caractérisé en ce que l'organe de commande (7) comprend une broche (11) disposée de préférence sur un bras de pivotement (9) excentriquement par rapport à l'axe de rotation de l'arbre (6) et s'engageant dans un guidage (10) le cas échéant réglable et en ce que le guidage (10) se meut sur le guidage horizontal (8).

3. Microtome suivant la revendication 1 ou 2, caractérisé en ce que l'arbre de guidage est maintenu de préférence par deux bras de support sur le mécanisme micrométrique (5).

4. Microtome suivant l'une quelconque des revendications de 1 à 3, caractérisé en ce que le guidage de cylindre est fixé au bâti (2) au moyen dune système de guidage à rouleaux à deux axes croisés et en ce qu'à côté du cylindre (18) est monté un mécanisme d'avance (24) avec une broche micrométrique (29).

5. Microtome suivant la revendication 4, caractérisé en ce qu'aux fins de garantir une stabilité suffisante et une course verticale uniforme, la guidage à rouleaux à arbres croisés est intentionnellement surdimensionné.

6. Microtome suivant l'une quelconque des revendications de 1 à 5, caractérisé en ce qu'il est prévu un dispositif de réglage (42) pour la course du dispositif porte-objet en direction de la lame de coupe par petits pas de consigne, où le dispositif de réglage (42) est disposé directement dans le bâti (2) avec un levier de réglage (43) prévu de préférence à l'avant et à gauche et peut, pendant la course de retour, être activé, de préférence au point d'admission bas.

7. Microtome suivant la revendication 6, caractérisé en ce que le dispositif de réglage (42) présente des étages de réglage de consigne déterminés, de préférence de 10, 20 et 30 mm, et en ce qu'il comprend un arbre de réglage (45) reliant le levier de réglage (43) à un disque cranté (44) présentant une courbe de réglage, et en ce que le disque cranté (44) ou la courbe de réglage sert à l'application du levier d'alimentation (26).

8. Microtome suivant la revendication 4 et le cas échéant suivant l'une quelconque des revendications de 5 à 7, caractérisé en ce que le mécanisme micrométrique (5) présente un mécanisme de rappel pour le rappel de préférence de 100 micromètres après la coupe, en ce que le rappel peut être déclenché par un élément à glissement vertical (46) dans une position de consigne et en ce qu'au moyen d'un arbre avec un palier, une fourchette de rappel (47) peut être glissée vers l'arbre micrométrique (20), en conséquence de quoi l'arbre micrométrique (20) est - à l'encontre de l'action d'un paquet de ressorts (21) et dans le sens opposé au sens d'alimentation - repoussé vers l'arrière, opération au cours de laquelle la fourchette de rappel (47) est reliée par similarité de forme à deux boulons aplatis (48) montés en haut et en bas du mécanisme micrométrique (5), et en ce que le rappel est atteint par une rotation réduite.

9. Microtome suivant la revendication 4 et le cas échéant l'une quelconque des revendications de 5 à 8, caractérisé en ce qu'aux fins d'obtenir une course horizontale rapide et une approche approximative de la lame de coupe est prévu un entraînement grossier agissant directement sur l'arbre micrométrique (20), en ce que de préférence du côté de la platine de base (2) opposé à la roue à main (3), notamment dans la position avant maximale, est prévu un support de palier (49) avec une roue d'entraînement grossier (50) et en ce que le mouvement de rotation de la roue d'entraînement grossier (50) est, au moyen d'une barre à section carrée se déplaçant dans deux articulations en croix aux fins de la compensation de longueur, de préférence transmis à une poulie, où le mouvement de rotation de la poulie est, par l'intermédiaire une courroie crantée (51), transmis à une seconde poulie crantée fixée au mécanisme micrométrique (5) et à l'arbre micrométrique (20) ou en ce que la rotation de la roue de réglage grossier (50) est, par l'intermédiaire d'une courroie crantée (51), transmise à un arbre flexible (52), et où l'arbre flexible (52) présente à son extrémité un profil carré (53) s'engageant dans un guidage à section carrée, aux fins de la compensation de longueur.

10. Microtome suivant la revendication 8, caractérisé en ce que la rotation de l'arbre flexible (52) peut, par l'intermédiaire d'une paire de pignons coniques (54) prévue à l'extrémité du mécanisme micrométrique (5), être transmise à l'arbre micrométrique, et où aux fins d'éviter un endommagement lorsque la butée terminale est atteinte, un accouplement à friction (55) est prévu sur l'axe de la roue d'entraînement grossier (50), et où l'accouplement à friction fonctionne avec des billes (56) montées sur ressorts et constitue en même temps un dispositif anti-blocage, au cas où un court-circuitage de l'accouplement à friction par poussée vers l'intérieur de la roue d'entraînement grossier (50) et la rotation dans le sens de rotation désiré est nécessaire.
